# EUROPEAN PATENT SPECIFICATION

(11) **EP 3 231 925 B1**
(45) Date of publication and mention of the grant of the patent: **02.11.2022**
(21) Application number: 15868038.9
(22) Date of filing: 31.08.2015
(51) Int. Cl.: D06F 29/00, D06F 39/08, D06F 33/32, D06F 33/36, D06F 33/38, D06F 33/40, D06F 33/42, D06F 33/48

(54) **MULTI-DRUM WASHING MACHINE DRAINING-DISCHARGING CONTROL METHOD**
VERFAHREN ZUR STEUERUNG DES ABWASSERABLAUFES FÜR EINE WASCHMASCHINE MIT MEHREREN TROMMELN
PROCÉDÉ DE COMMANDE D'ÉVACUATION/DE VIDANGE DE MACHINE À LAVER À TAMBOURS MULTIPLES

(30) Priority: 12.12.2014 CN 201410778720
(43) Date of publication of application: 18.10.2017
(73) Proprietor: Qingdao Haier Drum Washing Machine Co., Ltd., Shandong 266101 (CN)
(72) Inventor: LI, Wenwei, Qingdao Shandong 266101 (CN); WANG, Jinkai, Qingdao Shandong 266101 (CN); WU, Jun, Qingdao Shandong 266101 (CN); DING, Bin, Qingdao Shandong 266101 (CN); YI, Shaolei, Qingdao Shandong 266101 (CN)
(74) Representative: Beck & Rössig European Patent Attorneys
(86) International application number: PCT/CN2015/088595
(87) International publication number: WO 2016/090973

(56) References cited:
- CN-A- 101 113 557
- CN-A- 102 061 590
- CN-A- 102 203 337
- JP-A- H0 321 295
- JP-A- H1 015 276
- JP-A- S63 127 788
- US-A- 4 663 948
- US-A1- 2006 117 491
- US-A1- 2008 022 465
- US-A1- 2010 275 381

## Description

### FIELD OF THE INVENTION

The present invention relates to the field of washing by using a washing machine comprising multiple washing drums which are capable of washing clothing in different ways based on the amount and types of clothing. More specifically, the invention relates to the drainage-dehydration control method of a multi-drum washing machine as defined in the preamble portion of claim 1.

### BACKGROUND OF THE INVENTION

A washing machine executes cleaning, rinsing and spinning-dehydration operations to make use of the interaction between detergents and water to remove stains attached to clothing. A dryer as another representative clothing processing device is a household appliance for drying wet clothing.

Recently, a household appliance with combined function of a washing machine and a dryer has been widely used.

With the improvement of people's quality of life, people's health awareness has gradually increased, especially in aspect of family clothing washing, more and more people do laundry separately.

If using the existing washing machine to do multiple laundries, the washing time is hard to meet the users' requirements. If buying two or more washing machines to wash separately at the same time, it will not only bring a great waste of energy and water resources but also occupy a large space, which is not suitable for home use. Therefore, the use of multi-drum washing machine will meet the needs above and solve the problem of the waste of energy, water and space.

Reasonable design of double washing drums is arranged upper and lower, which is easy to save space. But it brings along the control problem of the whole washing machine using power, overload occurs particularly when heating, drying and dehydrating in high speed are executed at the same time at the same time. It seriously affecting the use of machine stability and life.

CN 102203337 B discloses a control method wherein two washing drums execute a same procedure alternately or sequentially. However, due to the different washing procedures of the double-drum washing machine, washing time and rinsing time of the two washing drums are different. If the washing procedure of one washing drum takes longer time, it will lead to a situation that the other washing drum is executing dehydration and drying procedures while the washing drum is executing a washing procedure. Thus, it will also result in the occurrence of a situation that two washing drums execute large power procedures at the same time at the same time.

Further, during a working procedure of a washing machine with multiple drums, if two washing drums execute the drainage procedure at the same time, this will lead to the occurrence of a situation that the outlet flow in the shared drainage pipe of the two washing drums is too large, so that drainage may not be completed timely and water may flow backward.

In addition, a washing machine having only one washing drum universally executes a corresponding dehydration procedure after completion of a washing procedure or a rinsing procedure, so as to improve the washing cleanliness of the clothing. However, in conventional multi-drum washing machines, the control of the drainage and dehydration procedure is not comprehensive enough.

A drainage-dehydration control method of a multi-drum washing machine as defined in the preamble portion of claim 1 is known from US 2008/002465 A1. According to US 2008/002465 A1 a first washing drum and a second washing drum are not simultaneously in the drainage process, so that the water in the first and second washing drums can be discharged completely during the predetermined time respectively provided in the control for that purpose in consideration of the flow capacity of a single external drain pipe. In other words, US 2008/002465 A1 teaches that drainage of the first drum should start once the second drum has been drained irrespective as to whether or not dehydration is carried out in the second drum.

US 2010/0275381 A1 discloses a control method of a washing machine having two washing drums. In order to reduce vibration of the washing machine, US 2010/0275381 A1 teaches different solutions. One is that the two washing drums are not simultaneously in the dehydration process, and another is that the two washing tubs rotate in reverse direction in the dehydration process.

Further, JP H03 21295 A discloses a pulsator type washing machine having a full automatic tank and a non-full automatic tank. Both tanks share one common external drainage outlet. In order to avoid obstruction of the drainage outlet by water from the non-full automatic tank during the dehydration process of the full automatic tank, drainage from the non-full automatic tank is temporarily stopped when the dehydration process of the full automatic tank has already started. The decision criterion in JP H03 21295 A is based on checking whether or not the full-automatic drum is in the dehydration process, if yes, drainage from the non-full automatic drum is temporarily stopped, if no, the non-full automatic drum is allowed to drain directly.

### SUMMARY OF THE INVENTION

The object of the present invention is to provide a drainage-dehydration control method of a multi-drum washing machine for increasing the degree of cleanliness.

This technical problem is solved by the method of claim 1. Advantageous embodiments are indicated in further claims.

According to the invention, before the control unit controls the first washing drum to execute a drainage procedure, while the control unit controls the second washing drum to be executing the drainage procedure, the control unit controls the first washing drum to continue to executing the washing procedure or the rinse procedure. And the control unit controls the first washing drum to start the drainage procedure and the dehydration procedure after the drainage procedure and the dehydration procedure of the second washing drum are completed.

According to the invention, before the control unit controls the first washing drum to execute the drainage procedure, while the control unit controls the second washing drum to be executing the dehydration procedure, the control unit controls the first washing drum to continue executing the washing procedure or the rinse procedure. And the control unit controls the first washing drum to start the drainage procedure and the dehydration procedure after the dehydration procedure of the second washing drum is completed.

In a further embodiment, when the control unit controls the first washing drum to continues executing the washing procedure or the rinse procedure, it is judged whether a remaining time from the completion of the dehydration procedure of the second washing drum is less than a shortest interval time. If yes, the control unit controls the first washing machine to stop executing the washing procedure or the rinse procedure. If no, the control unit controls the first washing machine to continues executing the washing procedure or the rinse procedure.

Preferably, the shortest interval time is not greater than one quarter of a total time required for the dehydration process.

In a further embodiment, when the control unit controls the first washing drum to execute the drainage procedure, the control unit controls the second washing drum not to execute the drainage procedure or the dehydration procedure simultaneously. When the control unit controls the first washing drum to execute the dehydration procedure, the control unit controls the second washing drum not to simultaneously execute any one of the procedures selected from the drainage procedure, the heating procedure, the dehydration procedure and the drying procedure.

In a further embodiment, before the control unit controls the first washing drum to execute the drainage procedure or the dehydration procedure, it is judged whether the second washing drum is executing any one of procedures selected from the drainage procedure, the heating procedure, the dehydration procedure and the drying procedure. If yes, the control unit controls the first washing drum to suspend executing the drainage procedure or the dehydration procedure, and the second washing drum to continue executing the running procedure. If no, the control unit controls the first washing drum to start the drainage procedure or the dehydration procedure.

In a further embodiment, the control unit controls the first washing drum to directly execute the dehydration procedure after the drainage procedure is completed so that drainage procedure and dehydration procedure of the same washing drum are executed continuously, in order to reduce the contact time between clothing and washing water.

In a further embodiment, it is judged firstly whether the second washing drum is working when the control unit controls the first washing drum to execute the drainage procedure or the dehydration procedure. If no, the control unit controls the first washing drum to execute the drainage procedure directly. If yes, it is judged whether the second washing drum is executing the drainage procedure or the dehydration procedure.

The benefits of the present disclosure are as follows:
1. The first washing drum and the second washing drum of the washing machine execute a drainage-dehydration procedure sequentially to avoid a slow drainage or that water in the upper washing drum flows backward into the lower washing drum when two washing drums of the washing machine execute the drainage procedure simultaneously, or to avoid the occurrence of executing dehydration procedure, high power procedures at the same time;
2. The first washing drum and the second washing drum of the washing machine respectively execute the drainage procedure and the dehydration procedures sequentially and continuously, in order to avoid the dehydration procedure being executed after a certain period of time from the completion of the drainage procedure, resulting in clothing with washing water for a long time, affecting the washing cleanliness of clothing.
3. When the first washing drum of the washing machine waits to execute a drainage-dehydration procedure, the first washing drum continues the previous and corresponding washing procedure or the rinsing procedure, in order to make reasonable use of the waiting time and increase the washing time of clothing. Meanwhile, it avoids clothing sinking in the washing drum, which will cause the stain in the washing water attached to the clothing, affecting the washing cleanliness of clothing;
4. It is judged whether another washing drum is executing a high power procedure before a washing drum executes the dehydration procedure, in order to avoid two washing drums executing the high power procedure at the same time and reducing the instantaneous power of the washing machine and improve the suitable electricity environment of double-drum washing machine;

Meanwhile, a heating control method of the present disclosure is simple and reliable, and the effect is obvious and it is suitable for promotion and use.

### BRIEF DESCRIPTION OF THE DARWINGS

The following is specific description of the present disclosure with the drawings.
Fig. 1 is a structural diagram of a multi-drum washing machine of the present disclosure;
Fig. 2 is a flow chart of a drainage-dehydration process of the present disclosure;
Fig. 3 is a flow chart of a dehydration process of a multi-drum washing machine of another embodiment of the present disclosure;
Fig. 4 is a flow chart of water supplying-replenishment process of the present disclosure;
Fig. 5 is a flow chart of a water reusing processof the present disclosure.

### DETAILED DESCRIPTION OF THE INVENTION

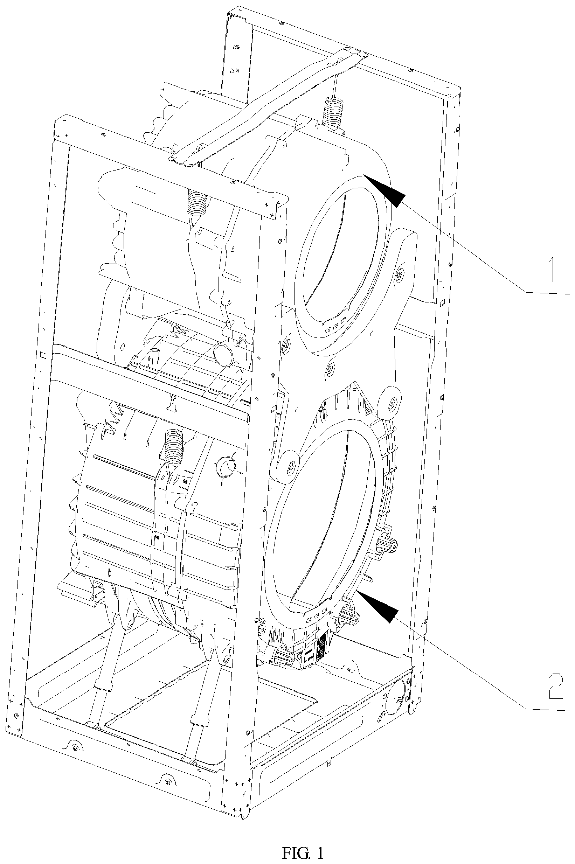

As shown in Fig.1, a multi-drum washing machine which is provided with at least a first washing drum 1 and a second washing drum 2 capable of executing washing steps independently. The first washing drum 1 and the second washing drum 2 can independently execute a washing procedure, a rinse procedure, a dehydration procedure to clothing, in order to achieve the purpose of washing clothing. Preferably, the multi-drum washing machine is equipped with a drying means to execute a drying procedure for drying clothing in the first washing drum 1 and/or the second washing drum 2 after the dehydration procedure is completed.

In the present disclosure, the first washing drum 1 is equipped with a first heater for heating washing water therein, and the second washing drum 2 is equipped with a second heater inside for heating the washing water therein. Thus, during executing a washing procedure, each heater separately heats washing water in the corresponding washing drum in order to control the temperature of water during the washing process.

However, as the withstand current of the common household cable is relatively small. It will generate a large load of instantaneous current if the first washing drum and the second washing drum work at the same time, which causes a user's household electricity distribution box to trip, even leads to the occurrence of cable burning. Therefore, it is necessary that the high power procedures of two washing drums of the double-drum washing machine are executed at different stages, in order to avoid the occurrence of the situation of high instantaneous current. The high power procedures comprise: the heating procedure, the dehydration procedure and the drying procedure and so on.

In order to avoid generating high instantaneous current when the washing machine heats, it is necessary that the second washing drum cannot execute any one of procedures selected from the heating procedure, the dehydration procedure and the drying procedure when the first washing drum is executing the dehydration procedure. Thus, to avoid the occurrence of the situation that two washing drums of the washing machine execute high power procedures at the same time.

Meanwhile, as the first washing drum and the second washing drum of the washing machine share a same drainage pipe. If the first washing drum and the second washing drum are draining simultaneously, it will lead to the water flow in the drainage pipe soared, resulting in the occurrence of the drainage of the washing machine is not smooth, and even drainage overflow from the ground leakage. Therefore, it is necessary to set drainage procedures of the double-drum washing machine interleaved, in order to avoid the occurrence of simultaneous drainage from happening.

### Embodiment 1

A drainage-dehydration control method of a multi-drum washing machine in the embodiment is introduced as follows:
Before the first washing drum executes a drainage procedure, it is judged whether the second washing drum is executing a drainage procedure or a dehydration procedure. If yes, the first washing drum continues to execute a washing procedure or a rinse procedure, or suspends executing drainage or dehydration procedure until the dehydration procedure of the second washing drum is completed. If no, the first washing drum starts the drainage procedure and the dehydration procedure.

In the embodiment, before the first washing drum starts the drainage procedure, the second washing drum is executing the drainage procedure, so the first washing drum continues to execute the washing procedure or the rinse procedure, or suspends executing the draining procedure or dehydration procedure. The first washing drum restarts the drainage procedure and the dehydration procedure when the drainage procedure and the dehydration procedure of the second washing drum are completed.

In the embodiment, before the first washing drum starts the drainage procedure, the second washing drum is executing the dehydration procedure, so the first washing drum continues to execute the washing procedure or the rinse procedure, or suspends executing the drainage procedure or the dehydration procedure. The first washing drum restarts the drainage procedure and the dehydration procedure when the dehydration procedure of the second washing drum is completed.

Moreover, in the embodiment, in the working process of the washing machine, after the first washing drum stops working due to a user's operation or power failure, and when the first washing drum begins to continue the drainage procedure or the dehydration procedure, it is necessary to judge whether the second washing drum is executing the drainage procedure or dehydration procedure. If yes, the first washing drum continues to execute the washing procedure or the rinse procedure, or suspends executing drainage or dehydration until the dehydration procedure of the second washing drum is completed. If no, the first washing drum starts the drainage procedure and the dehydration procedure.

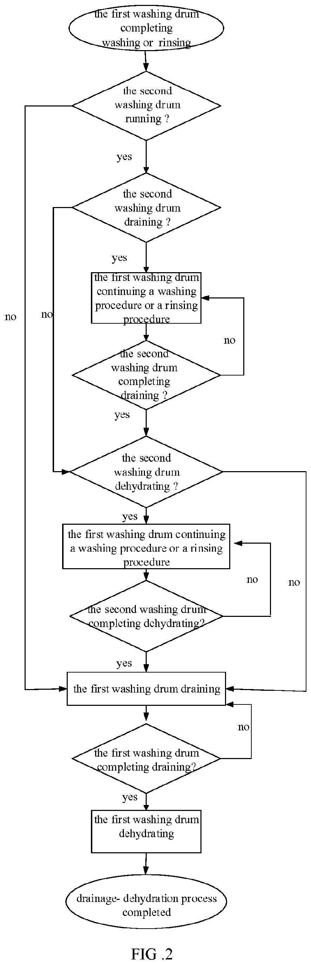

As shown in Fig. 2, in the embodiment, the drainage-dehydration control method of the multi-drum washing machine in detail is as follows:
1) the washing procedure or the rinse procedure of the first washing drum is completed and before the first washing drum starts the drainage procedure or the dehydration procedure;
2) judging whether the second washing drum is working;
   if yes, executing step 3); if no, executing step 7);
3) judging whether the second washing drum is executing the drainage procedure;
   if yes, executing step 5); if no, executing step 4);
4) judging whether the second washing drum is executing the dehydration procedure;
   if yes, executing step 5); if no, executing step 7);
5) the first washing drum continuing executing the washing procedure or the rinse procedure; and judging whether the dehydration procedure of the second washing drum is completed; if yes, executing step 6);
6) judging whether the drainage procedure and the dehydration procedure the second washing drum are completed; if yes, executing step 7);
7) the first washing drum starting the drainage procedure and the dehydration procedure.

In the embodiment, special situations are as follows:
Special situation 1: when the first washing drum needs to execute the drainage procedure or the dehydration procedure, and the second washing drum is going to finish the dehydration procedure. It is necessary to judge whether the remaining time from the completion of the dehydration procedure of the second washing drum is less than the shortest interval time.

Therefore, based on the steps from 1) to 7) described above in the embodiment, steps added as follows:
Adding the following judgment before the step 5): it is judged whether the remaining time from the completion of the dehydration procedure of the second washing drum is less than the shortest interval time. If yes, the first washing machine stops executing the washing procedure or the rinse procedure. If no, the first washing machine continues executing the washing procedure or the rinse procedure.

Or, it is necessary to judge whether the remaining time from the completion of the dehydration procedure of the second washing drum is less than the shortest interval time for the first washing drum to continue to execute the washing procedure or the rinse procedure. If yes, the first washing machine continues executing the washing procedure or the rinse procedure. If no, the first washing machine stops executing the washing procedure or the rinse procedure.

Preferably, the shortest interval time is not greater than one quarter of the total time required for the dehydration process.

Special situation 2: when the first washing drum needs to execute the dehydration procedure and the second washing drum is executing a heating procedure or a drying procedure. If the first washing drum starts the dehydration procedure, it will lead to that two washing drums executing high power procedures at the same time, causing a high instantaneous power of the washing machine, which causes damage to the washing machine.

Therefore, based on the steps from 1) to 7) described above in the embodiment, steps added as follows:
Adding the following judgment before the step 7): it is judged whether the second washing drum is executing any one of procedures selected from the drainage procedure, the heating procedure, the dehydration procedure and the drying procedure. If yes, the first washing drum suspends executing the drainage procedure, and the first washing drum restarts the drainage procedure (during the waiting process, the first washing drum can continue to execute the washing procedure or the rinse procedure) after the running procedure of the second washing drum is completed. If no, the first washing drum directly starts the drainage procedure.

In the embodiment, when the first washing drum is executing the drainage procedure, the second washing drum cannot simultaneously execute the drainage procedure or the dehydration procedure. When the first washing drum executes the dehydration procedure, the second washing drum cannot simultaneously execute any one of procedures selected from the drainage procedure, the heating procedure, the dehydration procedure and the drying procedure.

By using the control method described above, The first washing drum and the second washing drum of the washing machine execute a drainage-dehydration procedure sequentially, to avoid a slow drainage or that water in the upper washing drum flows backward into the lower washing drum when two washing drums of the washing machine execute the drainage procedures simultaneously, or to avoid the occurrence of executing dehydration procedures at the same time, and executing great high power procedures at the same time.

In the embodiment, the first washing drum directly starts the dehydration procedure after the drainage procedure is completed. The first washing drum and the second washing drum of the washing machine respectively execute the drainage procedures and the dehydration procedures sequentially and continuously, in order to avoid the dehydration procedure being executed intervals after a certain period of time from the completion of the drainage procedures, resulting in clothing with washing water for a long time, affecting the washing cleanliness of clothing.

### Embodiment 2

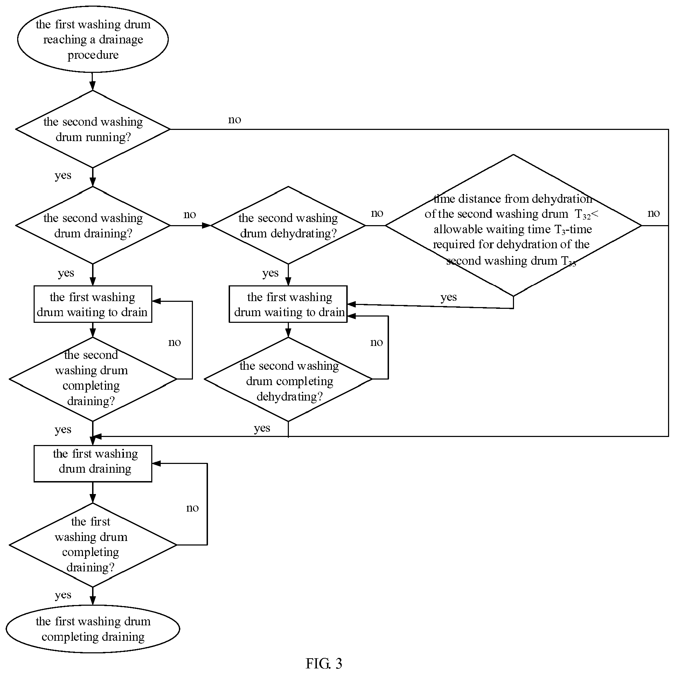

As shown in Fig. 3, a drainage control method of a multi-drum washing machine. When the first washing drum reaches the drainage procedure, it is determined whether or not the second washing drum is in a dehydration procedure. If the second washing drum is in the dehydration procedure, the first washing drum waits until the dehydration procedure of the second washing drum is completed, and then drains. The water in the first washing drum plays a role as a counterweight, thus it increases the overall weight of the washing machine to achieve the effect of vibration absorption.

If the second washing drum is not dehydrating at the moment, it is judged whether to wait until the dehydration is completed, and then to drain. It can avoid the scenario that the second washing drum starts to dehydrate as soon as the first washing drum finished draining water. Under that scenario the water in the first washing drum cannot achieve the effect of vibration absorption, resulting waste.

To determine whether or not to wait until the dehydration procedure is completed, and then drain: a time for reaching the dehydration procedure of the second washing drum is T₃₂, a time taken for the second washing drum to dehydrate is T₃₃, an allowable waiting time is T₃. If T₃₂ <T₃-T₃₃, which means it is within a range of the allowable waiting time, the first washing drum waits until the dehydration procedure of the second washing drum is completed, and then drains. Otherwise, the water of the first washing drum is drained directly.

Since draining outlets of the first washing drum and the second washing drum are connected to a drainage outlet of the washing machine through a pipe line, and the entire washing machine has only one drainage outlet. When the two washing drums drain at the same time, it will cause contamination to clothes due to the water reflux caused by the pressure difference. And the speeds of drainage at the same time and at different times are essentially the same while they share the same drainage pipe, so the first washing drum and the second washing drum cannot drain at the same time. When the first washing drum is about to drain, it is determined whether or not the second washing drum is draining at this time. If the second washing drum is draining at this time, the first washing drum waits until the drainage process of the second washing drum is completed, and then drains. Otherwise, the water in the first washing drum is drained directly.

In order to reuse water in the first washing drum, when the first washing drum reaches the drainage procedure, it is judged that whether or not water in the first washing drum can be reused. If no, water in the first washing drum is drained directly. If yes, it is judged whether or not the second washing drum is supplying water. If yes, water in the first washing drum is drained to the second washing drum to be reused. If no, it is judged whether the first washing drum waits until the second washing drum supplies water.

To determine whether or not the first washing drum waits until the second washing drum supplies water: it is compared a time T₁₂ for reaching a water supply procedure of the second washing drum and a time T₁₁ for reaching a next drainage procedure of the first washing drum. If T₁₂< T₁₁, the first washing drum waits until a start of water supply procedure of the second washing drum, and the water in the first washing drum is drained into the second washing drum to reuse the water. If T₁₂≥T₁₁, the water in the first washing drum is drained directly.

The judging process described above may cause long waiting time, at this time an allowable waiting time is set as T₁, T₁<T₁₁. If T₁₂<T₁, meaning that it is within the allowable time range of waiting, the first washing drum waits the start of the water supply procedure of the second washing drum, and the water in the first washing drum is drained into the second washing drum directly to reuse water. If T₁₂≥T₁, which mean it is beyond the range of the allowable waiting time, and the water in the first washing drum is drained directly.

When it is judged whether or not water in the first washing drum can be reused, the turbidity value or the bubble concentration value of water in the first washing drum is detected. If the turbidity value or the bubble concentration value is smaller than a set value, water in the first washing drum can be reused; if not, water in the first washing drum cannot be reused and be drained out directly.

When the first washing drum reaches a drainage procedure, it is judged whether or not the process of which the second washing drum is in progress or is about to operate is the water-supplying for the last rinsing. If yes, water in the first washing drum is drained out directly. If no, it is continued to judge whether or not water in the first washing drum can be reused.

The first washing drum and the second washing drum are only for the sake of convenience of the description, regardless of the order of the relationship. It is possible to determine whether or not the first washing drum is dehydrating at this time when the second washing drum is draining. If the first washing drum is dehydrating, the second washing drum waits until the dehydration of the first washing drum is completed, and drains. The water in the second washing drum plays the role as a counterweight which can increase the overall weight of the washing machine to achieve the effect of vibration absorption.

If the first washing drum is not dehydrating at the moment, it is judged whether to wait until the dehydration is completed, and to drain. It can avoid the scenario that the first washing drum starts to dehydrate as soon as the second washing drum finished draining water. Under that scenario the water in the second washing drum cannot achieve the effect of vibration absorption, resulting waste.

When the first washing drum reaches the drainage procedure, it is judged whether or not the second washing drum is operating at this time. If yes, it is judged whether or not the second washing drum is executing or is about to execute the dehydration procedure; if not, the first washing drum executes the drainage procedure directly.

As shown in Fig. 3, the control method described in the embodiment is:
1) the first washing drum reaching the drainage procedure;
2) judging whether or not the second is operating, if yes, executing step 3), if no, executing step 8);
3) judging whether or not the second is draining, if no, executing step 4), if yes, executing step 7);
4) judging whether or not the second is dehydrating, if no, executing step 5), if yes, executing step 6);
5) determining a time T₃₂ for reaching the dehydration process of the second washing drum, a time T₃₃ taken for the second washing drum to dehydrate, an allowable waiting time being set to T₃, If T₃₂ <T₃-T₃₃, executing step 6), otherwise executing step 8),
6) the first washing drum waiting until the dehydration of the second washing drum is completed, executing step 8);
7) the first washing drum waiting until the drainage of the second washing drum is completed, executing step 8);
8) the first washing drum draining.

### Embodiment3

In the present disclosure, the first washing drum 1 and the second washing drum 2 are communicated with the same inlet pipe through pipe path, and a control device for controlling the flow of water is provided on the pipes. Thus, before the washing process is performed, the washing water can be injected into first washing drum and/or the second washing drum through the water inlet pipe path.

However, since the inlet water flow rate of the household inlet pipe is constant, when the first washing drum and the second washing drum are supplied with water at the same time, it will cause the occurrence of smaller inlet flow rate and the first washing drum and the second washing drum not reaching the set water level. It also will cause the problem that inlet water flow rate is unstable and the water level of washing water in the first washing drum and the second washing drum cannot be accurately determined.

In order to avoid the above-mentioned situation, the water quantity or the water level in drums is monitored continuously or regularly during the execution of the washing procedure of the first washing drum and the second washing drum, to improve the problems of insufficient quantity of the inlet water and reduced water level due to water absorption by clothing and to replenish washing water timely.

Meanwhile, when the first washing drum is executing a water-supplying procedure, the second washing drum cannot simultaneously execute either the water-supplying procedure or a replenishment procedure. Likewise, when the second washing drum is executing the water-supplying procedure, the first washing drum cannot simultaneously execute either the water-supplying procedure or the replenishment procedure. Thus, the occurrence of the situation of two drums supplied with water at the same time is avoided.

In the embodiment, a replenishment control method of a multi-drum washing machine is introduced as follows:
when the first washing drum executes the water-supplying procedure and the replenishment procedure, it is judged whether the second washing drum is executing the water-supplying procedure or the replenishment procedure. It avoids two washing drums simultaneously executing the water-supplying procedure or the replenishment procedure which causes insufficient quantity of the inlet water of the washing drum.

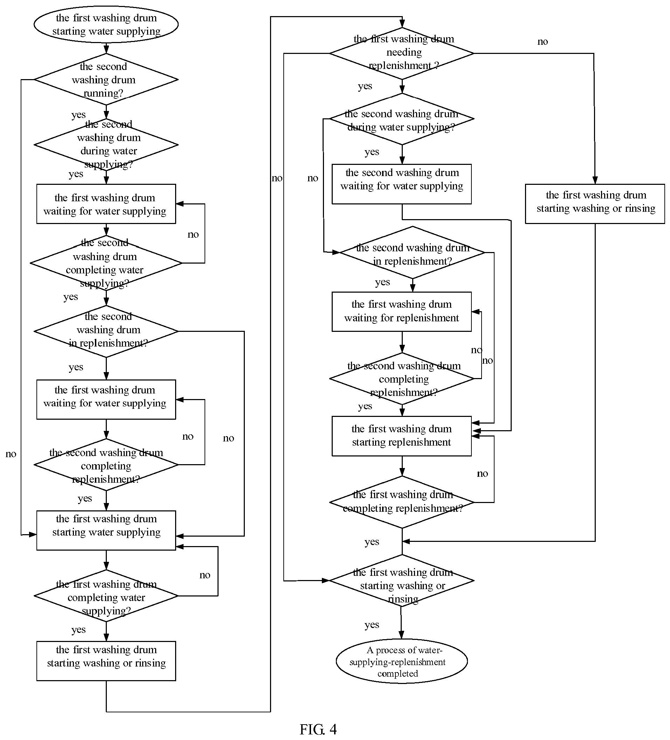

As shown in Fig. 4, the water supplying-replenishment control method of the multi-drum washing machine in the embodiment is as follows:
1) before the first washing drum executing the water-supplying procedure;
2) judging whether the second washing machine is executing the water-supplying procedure;
   if yes, executing step 4); if no, executing step 3);3) judging whether the second washing drum is executing the replenishment procedure;
   if yes, executing step 4); if no, executing step 5);
4) the first washing drum stopping executing the water-supplying procedure, and executing step 5) after the water-supplying procedure or the replenishment procedure of the second washing drum is completed;
5) the first washing drum executing the water-supplying procedure until the water-supplying procedure is completed;
6) the first washing drum executing the washing procedure;
7) during the process of washing, if the washing water level in the first washing drum is lower than the set water level, executing step 8);
8) the first washing drum executing the replenishment procedure;
9) judging whether the second washing drum is executing the water-supplying procedure;
   if yes, executing step 13); if no, executing step 10);
10) judging whether the second washing drum is executing the replenishment procedure; if yes, executing step 11); if no, executing step 12);
11) the first washing drum stopping executing the replenishment procedure, and executing step 12) after the replenishment procedure of the second washing drum is completed;
12) the first washing drum executing the replenishment procedure till the washing water reaches the set water level, and the replenishment procedure being completed;
13) the second washing drum stopping executing the water-supplying procedure and the first washing drum executing the replenishment procedure, and the second washing drum restoring to execute the water-supplying procedure after the washing water reaches the set water level.

In the embodiment, the water level described above is the set value corresponding to the washing procedure of the first washing drum. When the first washing drum executes the water-supplying procedure, the second washing drum cannot execute the water-supplying procedure or the replenishment procedure at the same time. A requirement for the water-supplying procedure of the first washing drum is completed is that the washing water level reaches the set water level.

In the embodiment, the replenishment control methods of the first washing drum and the second washing drum mentioned above are the same. Scilicet, by changing positions of the first washing drum and the second washing drum in steps 1) to 13), the replenishment control method of the second washing drum is obtained.

In the embodiment, in the above-mentioned control steps 1) to 13), special situations are as follows:

### Special situation 1:

When the first washing drum is executing the water-supplying procedure, if the second washing drum needs to execute the replenishment procedure, then the first washing drum waits and the second washing drum normally executes the replenishment procedure. The first washing drum executes the water-supplying procedure after the replenishment procedure of the second washing drum is completed. Thus, it reduces the user's waiting time and improves the degree of humanization of the whole machine by giving priority to the washing drum which takes short time.

### Special situation 2:

When the first washing drum is executing the replenishment procedure, if the second washing drum needs to execute the replenishment procedure, the second washing drum preferentially executes the replenishment procedure according to the sequence principle. The first washing drum executes the replenishment procedure after the replenishment procedure of the second washing drum is completed. Thus, the water-supplying and replenishment of the second washing drum and the first washing drum does not occur alternately, and times of opening and closing of the inlet valve are reduced, thereby facilitating the simplification of the control program of the washing machine.

Also, the washing machine can only issue one water-supplying command or water replenishment command at any time point, the commend can only control one of the first washing drum and the second washing drum to execute the water-supplying procedure or the replenishment procedure. Thus, the control unit of the washing machine can only issue the command of water-supplying or replenishment to the first washing drum or the second washing drum at the same time point. It prevents the occurrence of the situation that the first washing drum and the second washing drum simultaneously execute the water-supplying procedure or the replenishment procedure.

And sensors for detecting the water level of the washing water is respectively provided in the first washing drum and the second washing drum. When the first washing drum or the second washing drum starts executing the water-supplying procedure, the water inlet valve remains open until the washing water detected by the sensor reaches the set water level, then the inlet valve closes and the water-supplying procedure is completed. When the water level of the washing water of the first washing drum or the second washing drum is lower than the set value, the first washing drum or the second washing drum starts executing the replenishment procedure. The water inlet valve remains open until the washing water detected by the sensor reaches the set water level, and then the inlet valve closes and the replenishment procedure is completed.

In the embodiment, the requirement for judgment whether the first washing drum or the second washing drum is executing the water-supplying procedure or the replenishment procedure is whether or not the water inlet valves corresponding to the first washing drum and the second washing drum are open.

The method of judging whether or not the water inlet valve is open is: judging that the water inlet valve is open if the command received by the water inlet valve last time is an open command. Judging that the water inlet valve is closed if the command received by the water inlet valve last time was a close command. The first washing drum or the second washing drum needs to start the water-supplying procedure or the replenishment procedure after the water level of washing water detected by the water level sensor provided on the first washing drum or the second washing drum is lower than the set water level. At this time, the relevant steps from step 1) to step 13) in the present embodiment are started to determine whether or not the first washing drum or the second washing drum starts to execute the water-supplying procedure or the replenishment procedure. When the first washing drum or the second washing drum needs to start executing the water-supplying procedure or the replenishment procedure, the control unit of the washing machine sends an open signal to the corresponding water inlet valve, and the water inlet valve is in open state. During the water-supplying procedure or the replenishment procedure, the close signal is sent to the corresponding water inlet valve after the water level detected by the water level sensor in the corresponding washing drum reaches the set water level, and the water inlet valve is in closed state.

Or, the method of judging whether or not the water inlet valve is open is: judging whether there is water flowing through the corresponding water inlet valve. When there is water flowing through the inlet valve, the water inlet valve is in open state. When there is no water flowing through the inlet valve, the water inlet valve is in close state. The first washing drum and the second washing drum are respectively provided with a flow sensor on the water inlet valve for detecting the flow rate of the water flowing through the corresponding water inlet valve. When the flow sensor detects the flow of washing water, it is determined the corresponding water inlet valve is in open state; otherwise, it is determined the corresponding water inlet valve is in close state.

Or, the method of judging whether or not the water inlet valve is open is: judging whether the open time of the water inlet valve reaches the set time. If the open time of the water inlet valve reaches the set time, the water inlet valve is in close state. If the open time of the water inlet valve does not reach the set time, the water inlet valve is in open state.

A timer is set on the washing machine, when the water inlet valve receives an open signal, the timer starting to count and the water inlet valve is open until the counted time reaches the set time. When the counted time reaches the set time, the water inlet valve is in close state.

In the present embodiment, it is preferable that the water inlet valve of the first washing drum and the water inlet valve of the second washing drum are provided with interlocking devices for interlocking, so that the water inlet valve of the second washing drum can not be opened when the water inlet valve of the first washing drum is in the open state, and the water inlet valve of the first washing drum can not be opened when the water inlet valve of the second washing drum is in the open state. Thus, the occurrence of the situation that the water inlet valves of the first washing drum and the second washing drum are simultaneously opened is avoided. Of course, the interlocking device also has a third state in which the water inlet valves of the first washing drum and the second washing drum are both in the closed state.

### Embodiment4

In the present embodiment, in order to save the water consumption of the washing machine, the first washing drum and the second washing drum of the multi-drum washing machine are communicated with each other. So that the washing water discharged from the first washing drum which satisfies the cleanliness degree can be reused as water source of water-supplying or replenishment into the second washing drum. Also, the washing water discharged from the second washing drum which satisfies the cleanliness degree can be reused as water source of water-supplying or replenishment into the first washing drum.

Therefore, it is necessary to add the following judgment on the basis of the above-described embodiment 3: it is necessary to determine whether or not the second washing drum is executing or is about to execute the drainage procedure before the step 2) of the embodiment 3 is executed. If no, the first washing drum directly executes the water-supplying procedure or the replenishment procedure with clean water as water source. If yes, it is judged whether or not the water in the second washing drum can be reused; if yes, the first washing drum suspends executing the water-supplying procedure or the replenishment procedure, and washing water in the second washing drum flows into the first washing drum as water source of water-supplying or replenishment when the second washing drum starts draining.

In the present embodiment, the condition for judging whether or not the second washing drum is about to execute the drainage procedure is: whether the remaining time of the second washing drum from reaching the execution of the next drainage procedure is smaller than the set time. If yes, the first washing drum suspends executing the water-supplying procedure or the replenishment procedure, the washing water in the second washing drum flows into the first washing drum to be reused when the second washing drum starts draining. If no, the second washing drum is directly supplied with clean water.

In the present embodiment, the condition for judging whether the washing water in the second washing drum can be reused is: detecting the turbidity value or the bubble concentration value of water in the second washing drum. If the turbidity value or the bubble concentration value is less than the set value, water in the second washing drum can be reused; if not, water in the second washing drum cannot be reused.

### Embodiment 5

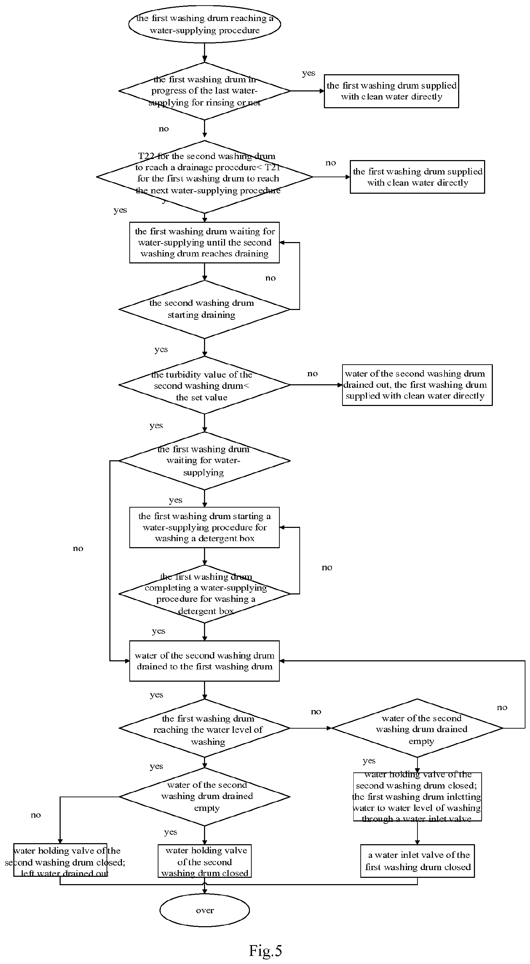

As shown in Fig. 5, the present embodiment uses a waiting time of the water supply as a determination criterion to determine whether or not to reuse the water. According to the waiting time of water supply, it is determined whether to reuse water drained from the other washing drum when one washing drum reaches the water supply procedure. The method has a simple judgment and control logic; the control stability is high in the actual washing process. At the same time, it achieves a full reuse of water, and the practical value is high, which is more effective to promote and apply.

The judgment that whether or not the inlet water can be reused in the present embodiment, can be combined with the judgment steps of the water-supplying-replenishment procedure described in the embodiment 4, to determine whether the water drained out from the washing drum can be reused as water source for water-supplying or replenishment of another washing drum. It can achieve the purpose of the reuse of washing water.

When the first washing drum and the second washing drum are simultaneously in working state, the water reuse control method is as follows:
A water reuse control method of a multi-drum washing machine is provided, and the multi-drum washing machine at least comprises a first washing drum and a second washing drum. When the first washing drum and the second washing drum are both in the working state at the same time, the water reuse control method is as follows: when the first washing drum reaches the water-supplying procedure, it is compared a time T₂₂ for reaching a drainage procedure of the second washing drum and a time T₂₁ for reaching a next water-supplying procedure of the first washing drum. If T₂₂≥T₂₁, the first washing drum supplies clean water directly. If T₂₂< T₂₁, the first washing drum waits until a start of the drainage procedure of the second washing drum.

It is determined whether or not the water in the second washing drum can be reused before comparing the time T₂₂ for reaching the drainage procedure of the second washing drum and the time T₂₁ for reaching the next water-supplying procedure of the first washing drum. If no, the water in the first washing drum supplies clean water directly. If yes, it is compared the time T₂₂ for reaching the drainage procedure of the second washing drum and the time T₂₁ for reaching the next water-supplying procedure of the first washing drum. Or, it is determined whether or not the water in the second washing drum can be reused when the first washing drum waits until the start of the drainage procedure of the second washing drum. If no, the first washing drum supplies clean water directly. If yes, the water in the second washing drum is drained into the first washing drum for reusing.

### Specific:

step 1: when the first washing drum reaches the water-supplying procedure, it is compared the time T₂₂ for reaching the drainage procedure of the second washing drum and the time T₂₁ for reaching the next water-supplying procedure of the first washing drum. If T₂₂≥T₂₁, the first washing drum supplies clean water directly. If T₂₂< T₂₁, the first washing drum waits until a start of the drainage procedure of the second washing drum, execute step 2;

Step 2: it is determined whether or not the water in the second washing drum can be reused. If yes, the water in the second washing drum is drained into the first washing drum to reuse; if no, the first washing drum supplies clean water directly. By adding the process of the determination of whether or not to wait, to a large extent it increases the water reuse probability of the second washing drum, and more water can be reused.

In step 1, if the second washing drum is draining water when the first washing drum reaches the water-supplying procedure, the time T₂₂ for reaching the drainage procedure of the second washing drum is 0, and no need to wait, and directly executes step 2. It is also possible to first determine whether or not the second washing drum is currently performing the drainage procedure before comparing the time T₂₂ for reaching the drainage procedure of the second washing drum and the time T₂₁ for reaching the next water-supplying procedure of the first washing drum. If the second washing drum is not subjected to the drainage procedure, then it is compared the time T₂₂ for reaching the drainage procedure of the second washing drum and the time T₂₁ for reaching the next water-supplying procedure of the first washing drum.

In step 1, an allowable waiting time T₂ is set, which T₂<T₂₁. If T₂₂<T₂, the first washing drum waits until the second washing drum drains, and executes step 2. If T₂₂≥T₂, the first washing drum supplies clean water directly. This step can avoid the first washing drum waiting too long and reasonably arrange the water reuse under the premise of ensuring the washing time of the first washing drum. Thus, it will not waste too much time of the first washing drum because of only considering water reuse. If the washing machine determines that the waiting time is too long and exceeds the set allowable waiting time, the first washing drum is not reuse the water in the second washing drum. The determination makes the reuse of water more reasonable, optimizing the relationship between waiting time and water reuse to a large extent.

In step 2, the turbidity value or the bubble concentration value of the water in the second washing drum is detected. If the turbidity value or the bubble concentration value of the water is smaller than the set value, the water in the second washing drum can be reused. Otherwise the water in the second washing drum cannot be reused. Water can be reused when the turbidity value or bubble concentration value of the water is within the set range.

In step 1, when the first washing drum reaches the water-supplying procedure, it is determined whether or not the water-supplying procedure being executed is a water supply for a last rinse. If yes, the first washing drum supplies clean water directly. If no, it is continued to compare the time T₂₂ for reaching the drainage procedure of the second washing drum and the time T₂₁ for reaching the next water-supplying procedure of the first washing drum. Thus it is ensured that the water supplied-in in the last rinse procedure is clean water, which ensures that the effect of washing clothes after washing.

In step 2, before the water in the second washing drum is drained into the first washing drum, it is determined whether or not the first washing drum executes the water-supplying procedure for washing. If yes, the first washing drum first supplies water for washing the detergent box. After the completion of water supply for washing the detergent box of the first washing drum, the water in the second washing drum is drained into the first washing drum. If no, the water in the second washing drum is drained into the first washing drum directly.

In step 2, when the water in the second washing drum is drained into the first washing drum, the height of the water level in the first washing drum is detected. If the water level in the first washing drum reaches the set water level value and there is water in the second washing drum, the remaining water in the second washing drum is discharged directly. If the water in the second washing drum is entirely drained into the first washing drum and the water level in the first washing tub does not reach the set water level value, then the first washing drum supplies clean water.

Before the water in the second washing drum is drained away directly, it is determined whether or not the first washing drum is performing the dehydration procedure. If yes, the second washing drum waits until the dehydration procedure of the first washing drum is completed, and then drains. If no, it is determined a time T₄₁ for reaching the dehydration procedure of the first washing drum, a time T₄₄ taken for the first washing drum to dehydrate, and an allowable waiting time T₄ is set. If T₄₁+T₄₄<T₄, the second washing drum waits until the dehydration procedure of the first washing drum is completed, and then drains. Otherwise, the water of the second washing drum is drained directly.

It is also possible to determine whether or not the water in the first washing drum can be reused by determining the washing state and the washing times. In step 2, the water in the first washing drum cannot be reused, if the second washing drum is in a washing procedure when it drains and the first washing drum is in a rinse procedure when it supplies water; or if the first, second washing drums are both in the washing procedure when the second washing drum drains and the first washing drum supplies water, and washing times of the second washing drum is less than washing times of the first washing drum; or if the first, second washing drums are both in the rinse procedure when the second washing drum drains and the first washing drum supplies water, and rinsing times of the second washing drum is less than rinsing times of the first washing drum.

When the second washing drum reaches the water-supplying procedure, it is compared the time for reaching the drainage procedure of the first washing drum and the time for reaching the next water supply of the second washing drum, and it is determined whether or not the second washing drum waits until the first washing drum drains.

The drainage outlet of the second washing drum is communicated with the first washing drum, and the water in the second washing drum can be drained into the first washing drum to reuse. The drainage outlet of the second washing drum is provided with a holding valve, the water in the second washing drum can flow through the holding valve into the first washing drum. The first washing drum is provided with an inlet valve and the clean water outside can flow into the first washing drum through the inlet valve. The control method is as follows:
1) The first washing drum reaches the water-supplying procedure,
2) It is determined whether or not the water in the second washing drum can be reused, if yes, execute step 3), if no, execute step 6),
3) It is determined a time T₂₁ for reaching a next water-supplying procedure of the first washing drum, a time T₂₂ for reaching a drainage procedure of the second washing drum, if T₂₂< T₂₁, execute step 4), if T₂₂≥T₂₁, execute step 6),
4) The first washing drum waits until the second washing drum drains, execute step 5),
5) The water in the second washing drum is drained into the first washing drum,
6) The first washing drum supplies clean water directly and the water in the second washing drum is drained away directly.

The control method can also add a procedure of determining whether or not the second washing drum is draining water before comparing the time T₂₂ for reaching the drainage procedure of the second washing drum and the time T₂₁ for reaching the next water-supplying procedure of the first washing drum. The control method is as follows:
1) The first washing drum reaches the water-supplying procedure,
2) It is determined whether or not the water in the second washing drum can be reused, if yes, execute step 3), if no, execute step 7),
3) It is determined whether or not the second washing drum is performing the drainage procedure, if no, execute step 4), if yes, execute step 6),
4) It is determined a time T₂₁ for reaching a next water-supplying procedure of the first washing drum, a time T₂₂ for reaching a drainage procedure of the second washing drum, if T₂₂< T₂₁, execute step 5), if T₂₂≥T₂₁, execute step 7),
5) The first washing drum waits until the second washing drum drains, executes step 6),
6) The water in the second washing drum is drained into the first washing drum,
7) The first washing drum supplies clean water directly and the water in the second washing drum is drained away directly.

The control method may also include determining whether or not the first washing drum has enough time to wait the second washing drum draining, the control method is as follows:
1) The first washing drum reaches the water-supplying procedure,
2) It is determined whether or not the water in the second washing drum can be reused, if yes, execute step 3), if no, execute step 8),
3) It is determined whether or not the second washing drum is performing the drainage procedure, if no, execute step 4), if yes, execute step 7),
4) It is determined a time T₂₁ for reaching a next water-supplying procedure of the first washing drum, a time T₂₂ for reaching a drainage procedure of the second washing drum, if T₂₂< T₂₁, execute step 5), if T₂₂≥T₂₁, execute step 8),
5) an allowable waiting time T₂ is set, if T₂₂<T₂, execute step 6), if T₂₂≥T₂, execute step 8),
6) The first washing drum waits until the second washing drum drains, execute step 7),
7) The water in the second washing drum is drained into the first washing drum,
8) The first washing drum supplies clean water directly and the water in the second washing drum is drained away directly.

If the water in the second washing drum is too dirty or water-supplying procedure of the first washing drum is for the last rinse, the water in the second washing drum cannot be reused. The control method is as follows:
1) The first washing drum reaches the water-supplying procedure,
2) It is determined whether or not the first washing drum has only the last rinse left, if no, execute step 3), if yes, execute step 9),
3) It is determined whether or not the second washing drum is performing drainage procedure, if no, execute step 4), if yes, execute step 7),
4) It is determined a time T₂₁ for reaching a next water-supplying procedure of the first washing drum, a time T₂₂ for reaching a drainage procedure of the second washing drum, if T₂₂< T₂₁, execute step 5), if T₂₂≥T₂₁, execute step 9),
5) an allowable waiting time T₂ is set, if T₂₂<T₂, execute step 6), if T₂₂≥T₂, execute step 9),
6) The first washing drum waits until the second washing drum supplies water, execute step 7),
7) The turbidity value or the bubble concentration value of the water in the second washing drum is detected to determine whether or not the turbidity value or the bubble concentration value is smaller than the set value,
   if yes, execute step 8), if no, execute step 9),
8) The water in the second washing drum is drained into the first washing drum,
9) The first washing drum supplies clean water directly and the water in the second washing drum is drained away directly.

When the water in the second washing drum is drained into the first washing drum and if the water supply of the first washing drum is for washing, the detergent box need to be washed and water level need to be detected. The control method is as follows:
1) The first washing drum reaches the water-supplying procedure,
2) It is determined whether or not the first washing drum has only the last rinse left, if no, execute step 3), if yes, execute step 12),
3) It is determined whether or not the second washing drum is performing drainage procedure, if no, execute step 4), if yes, execute step 7),
4) It is determined a time T₂₁ for reaching a next water-supplying procedure of the first washing drum, a time T₂₂ for reaching a drainage procedure of the second washing drum, if T₂₂< T₂₁, execute step 5), if T₂₂≥T₂₁, execute step 12),
5) An allowable waiting time T₂ is set, if T₂₂<T₂, execute step 6), if T₂₂≥T₂, execute step 12),
6) The first washing drum waits until the second washing drum drains water, execute step 7),
7) The turbidity value or the bubble concentration value of the water in the second washing drum is detected to determine whether or not the turbidity value or the bubble concentration value is smaller than the set value,
   if yes, execute step 8), if no, execute step 12),
8) It is determined whether or not the first washing drum is performing the water-supplying procedure for washing, if yes, execute step 9), if no, execute step 10),
9) The first washing drum first supplies water for washing the detergent box,
   after the completion of water supply for washing the detergent box of the first washing drum, execute step 10),
10) The water in the second washing drum is drained into the first washing drum,
11) It is detected the height of the water level in the first washing drum. When the water level in the first washing drum reaches the set water level value and if there is still water left in the second washing drum, the left water is drained away directly. If the water level in the first washing drum still not reaches the set water level value after the water in the second washing drum is entirely drained into the first washing drum, water from outside is flooded into the first washing drum through the water inlet.
12) The first washing drum supplies clean water directly and the water in the second washing drum is drained away directly.

In the present embodiment, the water inlet of the second washing drum is communicated with the drainage outlet of the first washing drum. The water in the first washing drum can be drained into the second washing drum for reuse. The drainage outlet of the first washing drum is provided with a holding valve and the water of the first washing drum can flow into the second washing drum through the holding valve. The second washing drum is provided with an inlet valve, clean water from outside can flow into the second washing drum through the inlet valve.

In the present embodiment, the first washing drum and the second washing drum of the present embodiment are only for the sake of convenience of the description, regardless of the order of the relationship. It may also to reuse the water in the first washing drum. However, the two washing drums cannot perform the steps mentioned above at the same time, to avoid the occurrence of causing an infinite loop of both washing drums waiting from happening.

## Claims

1. A drainage-dehydration control method of a multi-drum washing machine, the washing machine comprising a first washing drum (1) and a second washing drum (2) and a control unit, wherein:
before the control unit controls the first washing drum (1) to execute a drainage procedure, the control unit judges whether the second washing drum (2) is executing a drainage procedure or a dehydration procedure;
wherein
if yes and the dehydration procedure is being executed in the second washing drum (2), the control unit controls the first washing drum (1) to continue executing a washing procedure or a rinse procedure, or suspend executing drainage and dehydration until the dehydration procedure of the second washing drum (2) is completed;
if yes and the drainage procedure is being executed in the second washing drum (2), the control unit controls the first washing drum (1) to continue executing a washing procedure or a rinse procedure, or suspend executing drainage and dehydration until the drainage procedure and the dehydration procedure of the second washing drum (2) are completed,
if no, the control unit controls the first washing drum (1) to start the drainage procedure and the dehydration procedure.

2. The method according to claim 1, wherein:
before the control unit controls the first washing drum to execute the drainage procedure, and while the control unit controls the second washing drum to be executing the drainage procedure,
the control unit controls the first washing drum to continue executing the washing procedure or the rinse procedure,
and the control unit controls the first washing drum to start the drainage procedure and the dehydration procedure when the drainage procedure and dehydration procedure of the second washing drum are completed.

3. The method according to claim 1, wherein:
before the control unit controls the first washing drum to execute the drainage procedure, and while the control unit controls the second washing drum to be executing the dehydration procedure,
the control unit controls the first washing drum to continue executing the washing procedure or the rinse procedure,
and the control unit controls the first washing drum to start the drainage procedure and the dehydration procedure when the dehydration procedure of the second washing drum is completed.

4. The method according to any one of claims from 1 to 3, wherein:
when the control unit controls the first washing drum to continue executing the washing procedure or the rinse procedure, it is judged whether a remaining time from reaching an end of the dehydration procedure of the second washing drum is less than a shortest interval time,
if yes, the control unit controls the first washing machine to stop executing the washing procedure or the rinse procedure; if no, the control unit controls the first washing machine to continue executing the washing procedure or the rinse procedure.

5. The method according to any one of claims from 1 to 4, wherein:
when the control unit controls the first washing drum to execute the drainage procedure, the control unit controls the second washing drum not to execute the drainage procedure or the dehydration procedure simultaneously,
when the control unit controls the first washing drum to execute the dehydration procedure, the control unit controls the second washing drum not to simultaneously execute any one of procedures selected from the drainage procedure, a heating procedure, the dehydration procedure and a drying procedure.

6. The method according to claim 5, wherein:
before the control unit controls the first washing drum to execute the drainage procedure or the dehydration procedure, it is judged whether the second washing drum is executing any one of procedures selected from of the drainage procedure, the heating procedure, the dehydration procedure and the drying procedure,
if yes, the control unit controls the first washing drum to suspend executing the drainage procedure or the dehydration procedure, and the second washing drum to continue executing a running procedure,
if no, the control unit controls the first washing drum to start the drainage procedure or the dehydration procedure.

7. The method according to any one of claims from 1 to 6, wherein:
the control unit controls the first washing drum to execute the dehydration procedure after the drainage procedure is completed.

8. The method according to any one of claims from 1 to 7, wherein:
it is judged firstly whether the second washing drum is working when the first washing drum is controlled to execute the drainage procedure,
if no, the control unit controls the first washing drum to execute the drainage procedure directly,
if yes, it is judged whether the second washing drum is controlled to be executing the drainage procedure or the dehydration procedure.

## Patentansprüche

1. Steuerverfahren für das Ablassen und Entwässern einer Mehrtrommelwaschmaschine, wobei die Mehrtrommelwaschmaschine eine erste Waschtrommel (1) und eine zweite Waschtrommel (2) sowie eine Steuereinheit umfasst, wobei:
bevor die Steuereinheit die erste Waschtrommel (1) steuert, um einen Ablassvorgang durchzuführen, die Steuereinheit beurteilt, ob die zweite Waschtrommel (2) gerade einen Ablassvorgang oder einen Entwässerungsvorgang durchführt;
wobei
wenn ja und der Entwässerungsvorgang in der zweiten Waschtrommel (2) durchgeführt wird, die Steuereinheit die erste Waschtrommel (1) steuert, um einen Waschvorgang oder einen Spülvorgang fortzusetzen oder die Durchführung des Ablassens und Entwässerns auszusetzen, bis der Entwässerungsvorgang der zweiten Waschtrommel (2) abgeschlossen ist;
wenn ja und der Ablassvorgang in der zweiten Waschtrommel (2) durchgeführt wird, die Steuereinheit die erste Waschtrommel (1) steuert, um einen Waschvorgang oder einen Spülvorgang fortzusetzen oder die Durchführung des Ablassens und Entwässerns auszusetzen, bis der Ablassvorgang und der Entwässerungsvorgang der zweiten Waschtrommel (2) abgeschlossen sind,
wenn nein, die Steuereinheit die erste Waschtrommel (1) steuert, um den Ablassvorgang und den Entwässerungsvorgang zu starten.

2. Verfahren nach Anspruch 1, wobei:
bevor die Steuereinheit die erste Waschtrommel zur Durchführung des Ablassvorgangs steuert, und während die Steuereinheit die zweite Waschtrommel zur Durchführung des Ablassvorgangs steuert,
die Steuereinheit die erste Waschtrommel steuert, um die Durchführung des Waschvorgangs oder des Spülvorgang fortzusetzen,
und die Steuereinheit die erste Waschtrommel so steuert, dass der Ablassvorgang und der Entwässerungsvorgang gestartet werden, wenn der Ablassvorgang und der Entwässerungsvorgang der zweiten Waschtrommel abgeschlossen sind.

3. Verfahren nach Anspruch 1, wobei:
bevor die Steuereinheit die erste Waschtrommel zur Durchführung des Ablassvorgangs steuert, und während die Steuereinheit die zweite Waschtrommel zur Durchführung des Entwässerungsvorgangs steuert,
die Steuereinheit die erste Waschtrommel steuert, um die Durchführung des Waschvorgangs oder des Spülvorgangs fortzusetzen,
und die Steuereinheit die erste Waschtrommel so steuert, dass der Ablassvorgang und der Entwässerungsvorgang gestartet werden, wenn der Entwässerungsvorgang der zweiten Waschtrommel abgeschlossen ist.

4. Verfahren nach einem der Ansprüche 1 bis 3, wobei:
wenn die Steuereinheit die erste Waschtrommel steuert, um den Waschvorgang oder den Spülvorgang fortzusetzen, beurteilt wird, ob die verbleibende Zeit bis zum Erreichen eines Endes des Entwässerungsvorgangs der zweiten Waschtrommel kürzer ist als eine kürzeste Intervallzeit,
wenn ja, die Steuereinheit die erste Waschmaschine so steuert, dass die Durchführung des Waschvorgangs oder des Spülvorgangs gestoppt wird; wenn nein, die Steuereinheit die erste Waschmaschine so steuert, dass die Durchführung des Waschvorgangs oder des Spülvorgangs fortgesetzt wird.

5. Verfahren nach einem der Ansprüche 1 bis 4, wobei:
wenn die Steuereinheit die erste Waschtrommel zur Durchführung des Ablassvorgangs steuert, die Steuereinheit die zweite Waschtrommel so steuert, dass sie den Ablassvorgang oder den Entwässerungsvorgang nicht gleichzeitig durchführt,
wenn die Steuereinheit die erste Waschtrommel so steuert, dass sie den Entwässerungsvorgang durchführt, die Steuereinheit die zweite Waschtrommel so steuert, dass sie nicht gleichzeitig einen der Vorgänge durchführt, die aus dem Ablassvorgang, einem Heizvorgang, dem Entwässerungsvorgang und einem Trocknungsvorgang ausgewählt werden.

6. Verfahren nach Anspruch 5, wobei:
bevor die Steuereinheit die erste Waschtrommel steuert, um den Ablassvorgang oder den Entwässerungsvorgang durchzuführen, beurteilt wird, ob die zweite Waschtrommel einen der Vorgänge durchführt, die aus dem Ablassvorgang, dem Heizvorgang, dem Entwässerungsvorgang und dem Trocknungsvorgang ausgewählt werden,
wenn ja, die Steuereinheit die erste Waschtrommel steuert, um die Durchführung des Ablassvorgangs oder des Entwässerungsvorgangs auszusetzen, und die zweite Waschtrommel, um die Durchführung eines laufenden Vorgangs fortzusetzen,
wenn nein, die Steuereinheit die erste Waschtrommel steuert, um den Ablassvorgang oder den Entwässerungsvorgang zu starten.

7. Verfahren nach einem der Ansprüche 1 bis 6, wobei:
die Steuereinheit die erste Waschtrommel steuert, um den Entwässerungsvorgang durchzuführen, nachdem der Ablassvorgang abgeschlossen ist.

8. Verfahren nach einem der Ansprüche 1 bis 7, wobei:
zunächst beurteilt wird, ob die zweite Waschtrommel in Betrieb ist, wenn die erste Waschtrommel so gesteuert wird, dass sie den Ablassvorgang durchführt,
wenn nein, die Steuereinheit die erste Waschtrommel steuert, um den Ablassvorgang direkt durchzuführen,
wenn ja, beurteilt wird, ob die zweite Waschtrommel so gesteuert wird, dass sie den Ablassvorgang oder den Entwässerungsvorgang durchführt.

## Revendications

1. Procédé de commande de vidange-déshydratation d'une machine à laver à plusieurs tambours, la machine à laver comprenant un premier tambour de lavage (1) et un second tambour de lavage (2) et une unité de commande, dans lequel :
avant que l'unité de commande ne commande au premier tambour de lavage (1) d'exécuter une procédure de vidange, l'unité de commande détermine si le second tambour de lavage (2) est en train d'exécuter une procédure de vidange ou une procédure de déshydratation ;
dans lequel
si tel est le cas et que la procédure de déshydratation est en cours d'exécution dans le second tambour de lavage (2), l'unité de commande commande au premier tambour de lavage (1) de poursuivre l'exécution d'une procédure de lavage ou d'une procédure de rinçage, ou de suspendre l'exécution de la vidange et
de la déshydratation jusqu'à ce que la procédure de déshydratation du second tambour de lavage (2) soit terminée ;
si tel est le cas et que la procédure de vidange est en cours d'exécution dans le second tambour de lavage (2), l'unité de commande commande au premier tambour de lavage (1) de poursuivre l'exécution d'une procédure de lavage ou d'une procédure de rinçage, ou de suspendre l'exécution de la vidange et de la déshydratation jusqu'à ce que la procédure de vidange et la procédure de déshydratation du second tambour de lavage (2) soient terminées,
si tel n'est pas le cas, l'unité de commande commande au premier tambour de lavage (1) de démarrer la procédure de vidange et la procédure de déshydratation.

2. Procédé selon la revendication 1, dans lequel :
avant que l'unité de commande ne commande au premier tambour de lavage d'exécuter la procédure de vidange, et pendant que l'unité de commande commande au second tambour de lavage d'exécuter la procédure de vidange,
l'unité de commande commande au premier tambour de lavage de poursuivre l'exécution de la procédure de lavage ou de la procédure de rinçage,
et l'unité de commande commande au premier tambour de lavage de démarrer la procédure de vidange et la procédure de déshydratation lorsque la procédure de vidange et la procédure de déshydratation du second tambour de lavage sont terminées.

3. Procédé selon la revendication 1, dans lequel :
avant que l'unité de commande ne commande au premier tambour de lavage d'exécuter la procédure de vidange, et pendant que l'unité de commande commande au second tambour de lavage d'exécuter la procédure de déshydratation,
l'unité de commande commande au premier tambour de lavage de poursuivre l'exécution de la procédure de lavage ou de la procédure de rinçage,
et l'unité de commande commande au premier tambour de lavage de démarrer la procédure de vidange et la procédure de déshydratation lorsque la procédure de déshydratation du second tambour de lavage est terminée.

4. Procédé selon l'une quelconque des revendications 1 à 3, dans lequel :
lorsque l'unité de commande commande au premier tambour de lavage de poursuivre l'exécution de la procédure de lavage ou de la procédure de rinçage, il est déterminé si un temps restant avant d'atteindre une fin de la procédure de déshydratation du second tambour de lavage est inférieur à un intervalle de temps le plus court,
si tel est le cas, l'unité de commande commande à la première machine à laver d'arrêter l'exécution de la procédure de lavage ou de la procédure de rinçage ; si tel n'est pas le cas, l'unité de commande commande à la première machine à laver de poursuivre l'exécution de la procédure de lavage ou de la procédure de rinçage.

5. Procédé selon l'une quelconque des revendications 1 à 4, dans lequel :
lorsque l'unité de commande commande au premier tambour de lavage d'exécuter la procédure de vidange, l'unité de commande commande au second tambour de lavage de ne pas exécuter simultanément la procédure de vidange ou la procédure de déshydratation,
lorsque l'unité de commande commande au premier tambour de lavage d'exécuter la procédure de déshydratation, l'unité de commande commande au second tambour de lavage de ne pas exécuter simultanément l'une quelconque des procédures sélectionnées parmi la procédure de vidange, une procédure de chauffage, la procédure de déshydratation et une procédure de séchage.

6. Procédé selon la revendication 5, dans lequel :
avant que l'unité de commande ne commande au premier tambour de lavage d'exécuter la procédure de vidange ou la procédure de déshydratation, il est déterminé si le second tambour de lavage est en train d'exécuter l'une quelconque des procédures sélectionnées parmi la procédure de vidange, la procédure de chauffage, la procédure de déshydratation et la procédure de séchage,
si tel est le cas, l'unité de commande commande au premier tambour de lavage de suspendre l'exécution de la procédure de vidange ou de la procédure de déshydratation, et au second tambour de lavage de poursuivre l'exécution d'une procédure en cours,
si tel n'est pas le cas, l'unité de commande commande au premier tambour de lavage de démarrer la procédure de vidange ou la procédure de déshydratation.

7. Procédé selon l'une quelconque des revendications 1 à 6, dans lequel :
l'unité de commande commande au premier tambour de lavage d'exécuter la procédure de déshydratation une fois la procédure de vidange terminée.

8. Procédé selon l'une quelconque des revendications 1 à 7, dans lequel :
il est tout d'abord déterminé si le second tambour de lavage est en train de fonctionner lorsque le premier tambour de lavage est commandé pour exécuter la procédure de vidange,
si tel n'est pas le cas, l'unité de commande commande au premier tambour de lavage d'exécuter directement la procédure de vidange,
si tel est le cas, il est déterminé si le second tambour de lavage est commandé pour exécuter la procédure de vidange ou la procédure de déshydratation.
